(19) Europäisches Patentamt
European Patent Office
Office européen des brevets

(11) **EP 2 411 419 B1**

(12) **FASCICULE DE BREVET EUROPEEN**

(45) Date de publication et mention de la délivrance du brevet:
**02.05.2018 Bulletin 2018/18**

(21) Numéro de dépôt: **10716577.1**

(22) Date de dépôt: **25.03.2010**

(51) Int Cl.:
*C08F 220/18* (2006.01)   *C10M 145/14* (2006.01)
*C10L 1/14* (2006.01)   *C10L 1/16* (2006.01)

(86) Numéro de dépôt international:
**PCT/FR2010/050544**

(87) Numéro de publication internationale:
**WO 2010/109144 (30.09.2010 Gazette 2010/39)**

(54) **POLYMERES (METH) ACRYLIQUES DE BAS POIDS MOLECULAIRE, EXEMPTS DE COMPOSES SOUFRES, METALLIQUES ET HALOGENES ET DE TAUX DE MONOMERES RESIDUELS FAIBLE, LEUR PROCEDE DE PREPARATION ET LEURS UTILISATIONS**

VON SCHWEFELHALTIGEN VERBINDUNGEN, METALLVERBINDUNGEN UND HALOGENIERTEN VERBINDUNGEN FREIE NIEDERMOLEKULARE (METH)ACRYLPOLYMERE MIT GERINGEM RESTMONOMERENGEHALT, HERSTELLUNGSVERFAHREN DAFÜR UND VERWENDUNG DAVON

LOW MOLECULAR WEIGHT (METH) ACRYLIC POLYMERS FREE OF SULPHUR-CONTAINING, METALLIC AND HALOGENATED COMPOUNDS AND WITH A LOW DEGREE OF RESIDUAL MONOMERS, PROCESS FOR THE PREPARATION THEREOF AND USES THEREOF

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **25.03.2009 FR 0901397**

(43) Date de publication de la demande:
**01.02.2012 Bulletin 2012/05**

(73) Titulaire: **TOTAL MARKETING SERVICES**
**92800 Puteaux (FR)**

(72) Inventeurs:
 • **DOLMAZON, Nelly**
  **F-69360 Serezin (FR)**
 • **SANTIAGO, José**
  **F-07340 Limony (FR)**
 • **STORET, Yvan**
  **F-38300 Serezin De La Tour (FR)**
 • **TORT, Frédéric**
  **F-69530 Brignais (FR)**

(74) Mandataire: **Hirsch & Associés**
**137, rue de l'Université**
**75007 Paris (FR)**

(56) Documents cités:
**EP-A- 1 882 707   FR-A- 2 903 410**
**FR-A- 2 903 418   US-A- 4 056 559**
**US-A- 5 480 943   US-B1- 6 878 776**

EP 2 411 419 B1

**Description**

Domaine technique

La présente invention concerne les polymères (méth)acryliques. Elle a plus particulièrement pour objet des polymères (méth)acryliques à chaîne grasse linéaire ou ramifiée en $C_8$ ou plus pouvant comporter des insaturations éthyléniques, de bas poids moléculaires, exempts de composés soufrés, métalliques et halogènes et dont le taux de monomères résiduels est faible.

L'invention a aussi pour objet un procédé de préparation par polymérisation radicalaire en solution de polymères (méth)acryliques à chaîne grasse linéaire ou ramifiée en $C_8$ ou plus pouvant comporter des insaturations éthyléniques, de bas poids moléculaires et exempts de composés soufrés, métalliques et halogènes.

L'invention concerne aussi l'utilisation de ces polymères dans des formulations qui peuvent être utilisées dans différents secteurs applicatifs tels que les résines acryliques solvantées à haut extrait sec, ou encore les additifs pétroliers et notamment les lubrifiants.

Par polymères (méth)acryliques, on entend dans la présente demande, les polyacrylates et/ou les polyméthacrylates d'alkyle.

Art antérieur et problème technique

Dans le domaine des polymères (méth)acryliques, la polymérisation radicalaire de monomères (méth)acryliques en milieu solvant est l'une des voies classiquement mises en oeuvre. La polymérisation est amorcée par des composés générateurs de radicaux libres tels que des peroxydes organiques ou des composés azoïques, qui peuvent être selon les cas associés ou non à des accélérateurs de décomposition, comme c'est le cas notamment dans les systèmes d'amorçage oxydo-réducteurs également appelés « redox ».

En polymérisation radicalaire, la longueur de chaîne cinétique γ des polymères est basée sur l'expression : kp [M]

$$Y = 2 \ ( \ f \ kd \ kt \ [I] \ )^{1\Omega}$$

dans laquelle

kp : constante de vitesse de propagation [M] : concentration en monomère f : facteur d'efficacité de l'amorceur kd : constante de vitesse de décomposition de l'amorceur kt : constante de vitesse de terminaison [I] : concentration en amorceur

Les masses moléculaires moyennes en poids des polymères obtenus selon ce procédé sont relativement élevées, généralement supérieures à 50 000 g/mole. Il peut toutefois s'avérer nécessaire de disposer de polymères possédant une masse moléculaire plus faible, notamment pour des raisons d'efficacité dans certaines applications industrielles ou pour répondre à des contraintes d'environnement comme c'est le cas dans le domaine des revêtements à base de résines acryliques solvantées. Dans ce cas, l'utilisation de résines acryliques de bas poids moléculaires permet en effet d'augmenter l'extrait sec des formulations solvantées sans en modifier la viscosité, ce qui va dans le sens d'une diminution de la teneur en composés organiques volatils.

Certaines applications des polymères (méth)acryliques exigent par ailleurs l'absence d'impuretés pouvant générer des problèmes d'odeur ou de coloration, telles que des composés soufrés, ainsi que l'absence de métaux ou d'halogènes.

La synthèse de polymères (méth)acryliques de bas poids moléculaires en milieu solvant est une problématique bien connue dans l'état de la technique et de nombreuses alternatives ont déjà été développées dans le but de limiter les masses moléculaires.

Ainsi, la polymérisation thermique à très haute température, décrite par exemple dans US 6.844.406 et US 4.117.235, permet de générer un grand nombre de radicaux par l'accélération de la cinétique de décomposition de l'amorceur, tout en augmentant la probabilité d'occurrence des réactions de transfert. Il en résulte des polymères de plus faible masse moléculaire, possédant une viscosité en solution réduite. Cependant, ce procédé mettant en oeuvre une température généralement comprise entre 150 et 250 °C, parfois supérieure à 300 °C, est limité à l'utilisation de solvants de point d'ébullition élevé et implique non seulement l'utilisation de concentrations élevées en amorceur mais aussi un coût énergétique important.

Dans US 4.652.605 relatif à la préparation de polymères vinyliques de bas poids moléculaire, le contrôle de la longueur de chaîne cinétique est assuré par l'introduction d'une concentration élevée en amorceur. La polymérisation en conditions diluées permet de plus de diminuer la probabilité d'occurrence des réactions de propagation et ainsi concourir à l'obtention de masses moléculaires faibles. Industriellement, ce procédé n'est toutefois pas économique en raison du coût élevé des amorceurs généralement mis en oeuvre et de sa faible productivité en polymère.

Dans US 4.056.559, des esters méthacryliques de masse moléculaire moyenne en poids comprise entre 400 et 10.000 sont préparés par polymérisation anionique en présence d'un anion alcoxyde comme catalyseur et d'un alcool qui sert d'agent régulateur de chaîne, le contrôle de la masse moléculaire étant réalisé par le rapport entre la quantité totale d'alcool utilisée et la charge de monomères. Le catalyseur, tel que le méthoxyde de sodium peut être neutralisé à l'issue de la réaction à l'aide d'un acide minéral tel que l'acide chlorhydrique, et un solvant organique polaire tel que le diméthylsulfoxyde peut être utilisé pour améliorer la solubilité et l'efficacité du catalyseur. Il n'est donc pas exclu que les polymères ainsi obtenus contiennent des traces d'halogène ou de composé soufré.

Une autre voie très largement utilisée pour limiter les masses moléculaires de polymères obtenus par polymérisation radicalaire est l'utilisation d'un agent de transfert de chaîne. Celui-ci a pour rôle de limiter les longueurs de chaînes polymères par la terminaison prématurée des centres actifs en croissance. L'agent de transfert de chaîne peut être le monomère lui-même, comme c'est le cas pour les monomères allyliques, ou encore le solvant, notamment dans le cas des solvants pro tiques tels que l'isopropanol utilisé dans le procédé décrit dans le document US 4.301.266. Industriellement, les agents de transfert de chaîne les plus utilisés sont des composés soufrés tels que les alkyl mercaptans et en particulier le lauryl mercaptan (FR 2.604.712, US 3.028.367). Si leurs constantes de transfert élevées en font des composés de choix pour un contrôle efficace des masses moléculaires, ces composés présentent toutefois l'inconvénient de conduire à des polymères odorants, susceptibles de présenter des problèmes de coloration au stockage. Ils sont également incompatibles avec les applications dans lesquelles le soufre est proscrit. D'autres techniques de polymérisation radicalaire dite contrôlée permettent également de limiter les masses moléculaires des chaînes polymères. On peut noter parmi elles la polymérisation contrôlée par les nitroxydes (NMP), la polymérisation amorcée par des espèces jouant simultanément un rôle d'agent de transfert, la polymérisation en présence de composés organométalliques ou encore les procédés de polymérisation par transfert d'atome (ATRP / RAFT), faisant appel à des molécules soufrées ou halogénées. Ces procédés présentent cependant divers inconvénients tels qu'une mise en oeuvre délicate, l'utilisation de composés pouvant entraîner la présence d'impuretés indésirables tels que des composés soufrés, métalliques ou halogènes, et un coût élevé.

Le document US 5.475.073 décrit un procédé de préparation de résines acryliques fonctionnalisées hydroxy, dans lequel un alcool allylique joue à la fois le rôle de solvant et d'agent de transfert, et l'amorceur est introduit en partie par addition continue au cours de la polymérisation. Les résines ont une masse moléculaire moyenne en nombre allant d'environ 500 à environ 10.000 g/mole.

L'article Paint India 53 (8) (Août 2003) d'Asian PPG, pages 33-46, décrit une nouvelle voie de synthèse de résines acryliques de bas poids moléculaires, basée sur l'introduction de l'amorceur, soit en partie, soit complètement, dans le réacteur avant l'introduction des monomères. Les monomères sont un mélange d'acide acrylique, de méthacrylate de méthyle, d'acrylate de 2-éthyl hexyle, de méthacrylate d'hydroxy éthyle et de styrène. Le peroxyde de di tert-butyle (DTBP) est utilisé comme amorceur et l'o-xylène comme solvant. La température de polymérisation est de 132 °C. Les masses moléculaires moyennes en poids des résines obtenues sont comprises entre 18.000 et 30.000 g/mole.

Dans WO 2008/006998 sont décrits des polymères (méth)acryliques de bas poids moléculaire ($\overline{Mw}$ inférieure à 20.000 g/mole) qui sont préparés par polymérisation radicalaire en solution, la totalité de l'amorceur radicalaire étant introduite en pied de cuve du réacteur avant l'ajout en continu des monomères en présence d'un accélérateur de décomposition. Or, on a constaté que selon ce procédé de préparation, le taux de monomères résiduels est important (plus de 18 % voire même jusqu'à 20 %, donc un cinquième des monomères engagés qui ne sont pas polymérisés), ce qui est préjudiciable pour les applications envisagées telles qu'utilisation comme additifs dans des formulations pétrolières, d'hydrocarbures, de lubrifiants.

Dans WO 2008/006965 est décrite l'utilisation dans les distillats hydrocarbonés de température d'ébullition comprise entre 150 et 450 °C d'homopolymère obtenu à parti d'ester oléfinique d'acide carboxylique en C3-C12 et d'un alcool gras comprenant une chaîne de plus de 16 atomes de carbone et éventuellement une liaison oléfinique , pour révéler l'efficacité des additifs de filtrabilité desdits distillats à base de co- et/ou terpolymère d'éthylène et d'ester vinylique d'acide carboxylique en $C_3$-$C_5$ et de mono-alcool comprenant 1 à 10 atomes de carbone. Ces homopolymères ont été préparés selon le mode opératoire décrit dans WO 2008/006968 (cf page 13, lignes 7-17)

Exposé de l'invention

De façon surprenante, il a maintenant été trouvé des polymères (méth)acryliques de bas poids moléculaire, à la fois exempts de composés soufrés, métalliques et halogènes, et dont le taux de monomères résiduels est faible ; en général, les monomères résiduels ne représentent pas plus de 10 % en masse des monomères engagés dans la réaction de polymérisation.

Ces polymères de bas poids moléculaire peuvent notamment être obtenus par polymérisation radicalaire en milieu solvant en utilisant un système d'amorçage très rapide, consistant à introduire la totalité des monomères dans le réacteur, avant l'introduction en continu d'au moins un amorceur radicalaire (ci-après l'amorceur radicalaire).

Pour une concentration en monomères donnée, la génération rapide dans le milieu de polymérisation d'un très grand nombre de radicaux permet de limiter la longueur de chaîne cinétique des chaînes en croissance et ainsi d'accéder à un niveau de masses moléculaires très faible.

De manière optionnelle, l'amorceur peut également être associé à un accélérateur de décomposition dans le but d'accélérer encore la cinétique de génération des radicaux libres dans le milieu et ainsi accroître leur concentration en combinant un mécanisme de décomposition thermique et un mécanisme de décomposition redox. L'absence d'utilisation d'un agent de transfert ou de toute technique de polymérisation radicalaire contrôlée conduit à des polymères exempts de composés soufrés, métalliques et halogènes. Par composés soufrés, on entend toutes les molécules comportant dans leur chaîne au moins un atome de soufre. De même, un composé sera dit métallique ou halogène dès lors qu'il comporte dans sa chaîne au moins un atome métallique tel que Fe, Co, Ni, Sn, Cr, Ti, sans que cette liste puisse être considérée comme exhaustive, ou au moins un atome halogène tel que Cl, Br, F, I.

La présente invention a donc pour objet des polymères (méth)acryliques à chaîne grasse linéaire ou ramifiée en $C_8$ ou plus pouvant comporter au moins une insaturation éthylénique, de masse moléculaire moyenne en poids $\overline{Mw}$ inférieure à 20.000 g/mole, exempts de composés soufrés, métalliques et halogènes et dont le taux de monomères résiduels est faible.

L'invention a aussi pour objet un procédé de synthèse de polymères (méth)acryliques à chaîne grasse linéaire ou ramifiée en $C_8$ ou plus pouvant comporter au moins une insaturation éthylénique, de masse moléculaire moyenne en poids $\overline{Mw}$ inférieure à 20.000 g/mole, exempts de composés soufrés, métalliques et halogènes et dont le taux de monomères résiduels est faible, par polymérisation radicalaire en solution, caractérisé en ce que l'on introduit initialement dans le réacteur un pied de cuve constitué de la totalité du (ou des) monomère(s) (méth)acryliques à chaîne grasse linéaire ou ramifiée en $C_8$ ou plus pouvant comporter au moins une insaturation éthylénique, puis on ajoute en continu l'amorceur radicalaire, en général en solution dans un solvant organique.

Un autre objet de l'invention est l'utilisation de polymères (méth)acryliques à chaîne grasse linéaire ou ramifiée en $C_8$ ou plus pouvant comporter au moins une insaturation éthylénique, de masse moléculaire moyenne en poids inférieure à 20.000 g/mole, exempts de composés soufrés, métalliques et halogènes et dont le taux de monomères résiduels est faible, comme additifs dans des formulations de résines acryliques solvantées à haut extrait sec, ou dans des formulations pétrolières telles que des formulations de lubrifiants.

D'autres caractéristiques et avantages de l'invention ressortiront mieux à la lecture de la description qui suit.

Exposé détaillé de l'invention

Les polymères (méth)acryliques à chaîne grasse linéaire ou ramifiée en $C_8$ ou plus pouvant comporter au moins une insaturation éthylénique, selon l'invention ont une masse moléculaire moyenne en poids $\overline{Mw}$ inférieure à 20.000 g/mole, plus particulièrement comprise entre 5.000 et 18.000 g/mole, de préférence comprise entre 6.000 et 15.000 g/mole.

Plus particulièrement, les polymères de l'invention sont des polymères (méth)acryliques à chaîne grasse linéaire ou ramifiée comportant de 12 à 50 atomes de carbone, de préférence de 16 à 40 atomes de carbone, de manière encore plus préférentielle de 18 à 22 atomes de carbone. Les chaînes grasses peuvent contenir une ou plusieurs insaturations éthyléniques.

De par leur faible niveau de masses moléculaires, les polymères selon l'invention présentent l'avantage de conduire à des résines acryliques de haut extrait sec, permettant de combiner une viscosité peu élevée et une faible teneur en composés organiques volatils. Les polymères selon l'invention, ne contenant ni composé soufré, ni aucune impureté métallique ou halogénée, ne présentent aucun problème d'odeur majeur ni d'évolution de coloration des résines au stockage. Ils répondent à la réglementation européenne dans le cadre de la réduction de la pollution liée à la formation d'oxydes de soufre. Ils satisfont des contraintes techniques imposant de réduire les impuretés métalliques et halogénées susceptibles d'être ajoutées par additivation dans des formulations pour certaines applications, notamment les applications pétrolières.

Un procédé de synthèse permettant d'obtenir les polymères selon l'invention, autre objet de l'invention, consiste en une polymérisation radicalaire en milieu solvant, avec la mise en oeuvre d'un système d'amorçage très rapide, plus particulièrement selon le mode opératoire suivant :

(a) dans un réacteur, on introduit un pied de cuve constitué de la totalité de(s) monomère (méth)acrylique(s) seul(s) ou éventuellement en solution dans un solvant organique ; le milieu réactionnel est mis sous agitation, de préférence sous atmosphère inerte, par exemple sous barbotage d'azote ;

(b) on porte le pied de cuve issu de l'étape (a) à la température de polymérisation ;

(c) à la température de polymérisation, on ajoute en continu un amorceur radicalaire, éventuellement en solution dans un solvant organique ;

(d) on maintient le milieu réactionnel issu de l'étape (c) à la température de polymérisation pendant plusieurs dizaines de minute ;

(e) on refroidit le milieu réactionnel à une température allant de 50 à 60 °C, de préférence sous atmosphère oxydante, de préférence sous agitation, on ajoute au moins un inhibiteur de polymérisation,

(f) on récupère le polymère en solution dans le solvant organique, de préférence après filtration des impuretés présentes dans le milieu réactionnel.

Les monomères (méth)acryliques à chaîne grasse linéaire ou ramifiée en $C_8$ ou plus pouvant comporter au moins une insaturation éthylénique utilisés dans le procédé selon l'invention sont en général disponibles commercialement. Ils peuvent par exemple être obtenus par estérification directe de l'acide (méth)acrylique avec des alcools à chaîne grasse linéaire ou ramifiée en $C_8$ ou plus pouvant comporter au moins une insaturation éthylénique ou par transestérification de (méth)acrylates à chaîne courte avec des alcools à chaîne grasse linéaire ou ramifiée en $C_8$ ou plus pouvant comporter au moins une insaturation éthylénique .

Plus particulièrement, les monomères (méth)acryliques ont une chaîne linéaire ou ramifiée comportant de 12 à 50 atomes de carbone, de préférence de 16 à 40 atomes de carbone, plus particulièrement de 18 à 22 atomes de carbone. Des monomères (méth)acryliques utilisables pour le procédé de l'invention sont par exemple l'acrylate de n-octyle, l'acrylate d'iso-octyle, l'acrylate de 2-éthyle hexyle, l'acrylate de nonyle, l'acrylate de décyle, l'acrylate d'isodécyle, l'acrylate d'undécyle, l'acrylate de dodécyle (également connu sous le nom d'acrylate de lauryle), l'acrylate de tridécyle, l'acrylate de tétradécyle (également connu sous le nom d'acrylate de myristyle), l'acrylate de pentadécyle, l'acrylate d'hexadécyle (également connu sous le nom d'acrylate de cétyle), l'acrylate d'heptadécyle, l'acrylate d'octadécyle (également connu sous le nom d'acrylate de stéaryle), l'acrylate de nonadécyle, l'acrylate d'eicosyle, l'acrylate de béhényle et leurs équivalents méthacryliques. Sont également utilisables pour le procédé de l'invention des mélanges de ces monomères ou des monomères obtenus par estérification ou transestérification à partir de mélanges d'alcools linéaires ou ramifiés présentant au moins 8 carbones dans leur chaîne et pouvant comporter au moins une insaturation éthylénique. Selon la nature du ou des monomères, il peut être nécessaire de les chauffer préalablement à leur introduction dans le réacteur s'ils sont solides à température ambiante.

Le ou les amorceurs radicalaires (dans ce qui suit, l'amorceur radicalaire) mis en oeuvre dans le procédé selon l'invention pour amorcer la polymérisation radicalaire sont en général des peroxydes organiques et/ou des composés azoïques.

Comme peroxydes organiques, on peut citer plus particulièrement la famille des peroxydes de diacyle, des peroxydes d'alkyle ou encore des peresters, et leurs mélanges. Des exemples de peroxydes organiques utilisables dans le procédé de l'invention sont le peroxyde d'acétyle, le peroxyde de benzoyle, le peroxyde de lauryle, le peroxyde de cumyle, le peroxyde de t-butyle, le peroxyde de caproyle, le tert-butyl peroxy-2-éthylhexanoate (également connu sous le nom de t-butyl peroctoate) ou encore le tert-butyl peroxybenzoate, particulièrement préféré, et leurs mélanges, sans que cette liste puisse être considérée comme exhaustive.

Comme composés azoïques, on peut citer le 2,2'-azobis(isobutyronitrile), le 2,2'-azobis(2-méthylbutyronitrile), le 2,2'-azobis(2,4-diméthyl)pentanenitrile, le 2,2'-azobis(4-méthoxy-2,4-diméthyl)pentanenitrile, le 1,1'-azobis(cyclohexane-carbonitrile), le 4,4'-azobis(4-cyanovalérique acide), le diméthyl-2,2'-azobis-(2-méthylpropionate), l'azobis(2-acétoxy-2-propane), le 2,2'-azobis(2-amidinopropane) dihydrochlorure, le 2- (tert-butylazo)4-méthoxy-2,4diméthyl-pentanenitrile, le 2-(tert-butylazo)-2,4- diméthylpentanenitrile, le 2-(tert-butylazo)isobutyronitrile, le 2-(tert-butylazo)-2- méthylbutanenitrile, le 1-(tert-amylazo)cyclohexanecarbonitrile, le 1-(tert-butylazo)cyclohexanecarbonitrile, et leurs mélanges, sans que cette liste puisse être considérée comme exhaustive.

Selon la nature chimique et les caractéristiques cinétiques de décomposition de l'amorceur radicalaire mis en oeuvre, il conviendra d'adapter la température de polymérisation et la durée de l'addition continue du mélange monomère pour obtenir le niveau de masses moléculaires souhaité.

Le solvant organique éventuellement utilisé pour la solubilisation de l'amorceur radicalaire doit être compatible avec celui éventuellement utilisé pour la mise en oeuvre du (des) monomère(s) (méth)acryliques ; il doit être exempt de toute impureté soufrée, métallique ou halogénée. De préférence, on utilise le même solvant organique pour l'amorceur radicalaire et pour le(s) monomère(s) (méth)acrylique(s). Comme solvants utilisables, on peut citer notamment des hydrocarbures et coupes pétrolières d'hydrocarbures aliphatiques et/ou aromatiques tels que l'hexane, le cyclohexane, l'heptane, le toluène, l'ensemble des isomères du xylène, le Solvarex 10 ® (commercialisé par TOTAL) et ses équivalents commerciaux, ainsi que l'ensemble des solvants classiquement utilisés pour la préparation de résines acryliques solvantées, tels que l'acétate d'éthyle, la méthyléthylcétone, sans que cette liste puisse être considérée comme exhaustive. Plus particulièrement, on utilise un solvant organique présentant un point éclair supérieur à 55 °C. On choisira de préférence une coupe pétrolière issue de la distillation, présentant un point d'ébullition supérieur à 100 °C et un pouvoir solvant exprimé selon le point d'aniline supérieur à 10 °C.

La concentration en monomère(s) par rapport au poids total du milieu réactionnel peut en général atteindre 70 % en poids, et est de préférence comprise entre 20 et 50 % en poids.

La température de polymérisation est généralement comprise entre 50 et 150 °C, de préférence entre 80 et 120 °C et en particulier entre 100 et 110 °C.

Autant que faire se peut, la température est maintenue constante tout au long de l'addition continue de l'amorceur radicalaire au sein du réacteur; les variations de température sont de préférence inférieures ou égales à ± 3 °C.

L'amorceur radicalaire en solution dans le solvant organique est introduit en continu dans le réacteur après l'introduction de(s) monomère(s). La durée d'introduction de l'amorceur radicalaire peut en général varier de 2 à 10 heures, de préférence de 5 à 7 heures.

La teneur en amorceur radicalaire est généralement comprise entre 2 et 14 % en poids par rapport aux monomères, de préférence comprise entre 2 et 6 % en poids.

Selon un mode de réalisation de l'invention, on associe à l'amorceur radicalaire, un accélérateur de décomposition en solution dans un solvant organique. On peut procéder à l'addition de l'accélérateur de décomposition dans le milieu réactionnel simultanément ou non à l'addition de l'amorceur radicalaire. L'addition de l'accélérateur de décomposition peut être réalisée de façon continue, séparément ou non de l'amorceur. De préférence, dans ce mode de réalisation, on utilise comme amorceur radicalaire un peroxyde organique, celui-ci jouant le rôle d'oxydant et l'accélérateur de décomposition celui de réducteur. Comme accélérateurs de décomposition, on peut citer des composés aromatiques tels que des amines aromatiques, plus particulièrement des amines tertiaires aromatiques comme les dérivés du type N,N'-dialkylaniline. On peut citer tout particulièrement, la N,N'-diméthylaniline, la N,N'-diéthylaniline, la N,N'-diméthyl-p-toluidine, ou des p- toluidine éthoxylés tels que la N,N'-bis-(2-hydroxyéthyl)-p-toluidine. Le solvant organique utilisé pour la solubilisation de l'accélérateur est de préférence celui utilisé pour l'amorceur radicalaire, ou tout autre solvant compatible.

La teneur en accélérateur de décomposition, lorsqu'il est présent, est généralement comprise entre 2 et 14 % en poids par rapport aux monomères, de préférence comprise entre 2 et 6 % en poids.

L'amorceur et l'accélérateur sont utilisés plus particulièrement dans des rapports massiques allant de 1 : 2 à 1 : 0,5, de préférence allant de 1 : 1,5 à 1 : 0,8.

Selon un mode de réalisation de l'invention, les monomères sont portés à la température de polymérisation préalablement à l'introduction de l'amorceur radicalaire. On opère pour la même raison sous atmosphère inerte, afin d'éviter au contact de l'oxygène de l'air la formation de radicaux peroxydiles de moindre réactivité.

Selon un mode de réalisation de l'invention, à la fin de l'addition en continu de l'amorceur, la température du milieu réactionnel est augmentée rapidement de 10 à 15 °C. Il s'ensuit alors une période de cuisson au cours de laquelle, de préférence au début de celle-ci, un ajout d'amorceur pouvant aller jusqu'à 50 % de la charge de départ en amorceur, peut éventuellement être réalisé. Pendant cette période de cuisson, la température du milieu réactionnel est maintenue à la température de polymérisation pendant en général 1 à 3 heures supplémentaires. Cette étape de cuisson pouvant inclure l'ajout d'amorceur, préférée, a pour objet de mener la conversion au maximum dans le but de minimiser la teneur en monomères résiduels dans la résine finale. La quantité d'amorceur ajoutée est généralement comprise entre 0,5 et 2% en poids par rapport aux monomères, de préférence comprise entre 0,5 et 1%.

En fin de réaction, le mélange réactionnel peut être additivé d'un stabilisant ou inhibiteur de polymérisation permettant d'éviter une éventuelle post-polymérisation des monomères résiduels, susceptible de conduire à une modification de la masse molaire moyenne des polymères lors du stockage. A titre d'exemple d'inhibiteur de polymérisation, on peut citer les hydroquinones, telles que par exemple la méthyl hydroquinone (HQMME)

Le procédé selon l'invention présente l'avantage de conduire à des polymères de masses moléculaires $\overline{Mw}$ faibles , typiquement inférieurs à 20.000 g/mol, difficilement accessibles par les techniques classiques avec des températures de polymérisation peu élevées, en l'absence d'agents de transfert soufrés qui présentent l'avantage d'avoir un taux de monomères résiduels faible, en général les monomères résiduels ne représentent pas plus de 10 % de la masse totale des monomères introduits.

Les polymères (méth)acryliques à chaîne grasse linéaire ou ramifiée en $C_8$ ou plus pouvant comporter au moins une insaturation éthylénique, de bas poids moléculaires, exempts de composés soufrés, métalliques et halogènes et contenant moins de 10 %, de préférence moins de 7 %, en masse de monomères résiduels sont particulièrement utilisables comme additifs dans des formulations qui peuvent être utilisées dans différents secteurs applicatifs tels que les résines acryliques solvantées à haut extrait sec ou encore les additifs pour produits pétroliers, notamment carburants et lubrifiants. Les résines acryliques solvantées à haut extrait sec sont notamment utilisées dans le domaine des revêtements, en particulier dans les peintures pour automobiles.

La présente invention concerne l'utilisation de copolymères pour améliorer l'activité des additifs de tenue à froid ou de filtrabilité classiques vis-à-vis de la température limite de filtrabilité (TLF) des distillats moyens. Le ou les polymères (méth)acryliques selon l'invention tels que définis plus haut sont ajoutés dans les distillats moyens avec l'additif de tenue à froid.

Au sens de la présente invention, les additifs de filtrabilité classiques sont des copolymères contiennent des unités dérivés d'au moins une alpha-oléfine, d'au moins un ester vinylique et/ou d'au moins un ester d'acide mono carboxylique alpha-beta insaturé ; à titre d'exemple, on peut citer les copolymères d'éthylène et d'acétate de vinyle (EVA), les copolymères d'éthylène et de propionate de vinyle, copolymères d'éthylène et d'alkyl(méth)acrylate(s), les terpolymères d'éthylène, d'ester vinylique et d'alkyl(méth)acrylate ; de préférence les copolymères et terpolymères comprennent de 20 à 40 % en poids de motifs esters (vinylique(s) et/ou acrylique(s)) .

Selon un mode préféré les additifs de filtrabilité sont des EVA.

Selon un mode préféré les additifs de filtrabilité sont des copolymères d'éthylène et d'acrylate de méthyle.

Selon un mode préféré les additifs de filtrabilité sont des copolymères d'éthylène et de 2-éthyl-hexanoate de vinyle.

Selon un mode préféré les additifs de filtrabilité sont des terpolymères d'éthylène, d'acétate de vinyle et de néodécanoate de vinyle.

Selon un mode préféré les additifs de filtrabilité sont des terpolymères d'éthylène, d'acétate de vinyle et de néodécanoate de vinyle.

Selon un mode préféré les additifs de filtrabilité sont des terpolymères d'éthylène, d'acétate de vinyle et de 2-éthyl-hexanoate de vinyle.

Les additifs de filtrabité sont des copolymères statistiques et ont une masse moléculaire en poids $\overline{Mw}$ mesurée par GPC en général comprise entre 3 000 et 30 000 g/mole et une masse moléculaire moyenne en nombre (Mn) mesurée par GPC en général comprise entre 1 000 et 15 000.

Ces copolymères peuvent être préparés de manière connue par tout procédé de polymérisation, (voir par exemple, Ullmann's Encyclopedia of Industrial Chemistry, 5ème Edition, "Waxes", Vol. A 28, p.146 ; US 3 627 838; EP 7 590) notamment par polymérisation radicalaire, de préférence sous haute pression, typiquement de l'ordre de 1.000 à 3.000 bars (100 à 300 MPa), de préférence de 1.500 à 2.000 bars (150 à 200 MPa), les températures de réaction allant en général de 160 à 320 °C, de préférence de 200 à 280 °C, et en présence d'au moins un initiateur radicalaire choisi en général parmi les peroxydes organiques et/ou les composés oxygénés ou azotés, et d'un régulateur de poids moléculaire (cétone ou aldéhyde aliphatique, ...). Les copolymères peuvent par exemple être préparés dans un réacteur tubulaire selon le procédé décrit dans US 6.509.424.

Les compositions à base d'hydrocarbures dans lesquels les copolymères selon l'invention sont incorporés, sont choisis parmi tous types de fiouls ou carburants, tels carburants diesel, fiouls domestiques pour installations de chauffage (FOD), kérosène, fiouls d'aviation, fiouls lourds, etc .

En général la teneur en soufre des compositions d'hydrocarbures est inférieure à 5.000 ppm, de préférence inférieure à 500 ppm, et plus préférentiellement inférieure à 50 ppm, voire même inférieure à 10 ppm et avantageuse sans soufre.

Les compositions à base d'hydrocarbures comprennent des distillats moyens de température d'ébullition comprise entre 100 et 500 °C; leur température de cristallisation commençante TCC mesurée par analyse Calorimétrique Différentielle est souvent supérieure ou égale à -20°C, en général comprise entre -15°C et +10°C. Ces distillats peuvent par exemple être choisis parmi les distillats obtenus par distillation directe d'hydrocarbures bruts, les distillats sous vide, les distillats hydrotraités, des distillats issus du craquage catalytique et/ou de l'hydrocraquage de distillats sous vide, les distillats résultant de procédés de conversion type ARDS (par désulfuration de résidu atmosphérique) et/ou de viscoréduction, les distillats issus de la valorisation des coupes Fischer Tropsch, les distillats résultant de la conversion BTL (biomass to liquid) de la biomasse végétale et/ou animale, prise seule ou en combinaison et/ou les esters d'huiles végétales et animales ou leurs mélanges.

Les compositions d'hydrocarbures peuvent également contenir des distillats issus des opérations de raffinage plus complexes que ceux issus de la distillation directe des hydrocarbures qui peuvent par exemple provenir des procédés de craquage, hydrocraquage et/ou craquage catalytique et des procédés de viscoréduction.

Elles peuvent également contenir de nouvelles sources de distillats, parmi lesquelles on peut notamment citer :

- les coupes les plus lourdes issues des procédés de craquage et de viscoréduction concentrées en paraffines lourdes, comprenant plus de 18 atomes de carbone,
- les distillats synthétiques issus de la transformation du gaz tels que ceux issus du procédé Fischer Tropsch,
- les distillats synthétiques résultant du traitement de la biomasse d'origine végétale et/ou animale, comme notamment le NexBTL,
- et les huiles et/ou esters d'huiles végétales et/ou animales,
- ou encore les biodiesel d'origine animale et/ou végétale.

Ces nouvelles bases carburants peuvent être utilisées seules ou en mélange avec des distillats moyens pétroliers classiques comme base carburant et/ou base de fioul domestique ; elles comprennent en général de longues chaînes paraffiniques avec un nombre d'atomes de carbone supérieur ou égal à 10 atomes de carbone et préférentiellement allant de $C_{14}$ à $C_{30}$.

De manière préférée, les compositions à base d'hydrocarbures sont des distillats moyens hydrocarbonés de température de cristallisation commençante TCC supérieure ou égale à -5°C, et avantageusement allant de -5 à +10 °C.

Selon un mode de réalisation préféré, le distillat hydrocarboné a une teneur massique en n-paraffines d'au moins 18 atomes de carbone supérieure ou égale à 4 %.

Selon un mode de réalisation préféré, le distillat hydrocarboné a une teneur massique en n-paraffines d'au moins 24 atomes de carbone supérieure ou égale à 0,7 %, et avantageusement une teneur massique en n-paraffines en $C_{24}$-$C_{40}$ allant de 0,7 à 2 %.

Selon un autre objet, l'invention concerne un carburant pour moteurs diesel comprenant une majeure partie de distillats hydrocarbonés tels que définis précédemment, et comprenant en général de 0 à 500 ppm de soufre, et une partie mineure d'au moins un additif de filtrabilité et d'au moins un révélateur d'efficacité selon l'invention tel que défini précédemment.

Selon un autre objet, l'invention concerne un fioul de chauffage comprenant une majeure partie de distillats hydrocarbonés tels que définis précédemment, et comprenant en général de 0 à 5.000 ppm de soufre, et une partie mineure d'au moins un additif de filtrabilité et d'au moins un révélateur d'efficacité selon l'invention tel que défini précédemment.

Selon un autre objet, l'invention concerne un fioul lourd comprenant une majeure partie de distillats hydrocarbonés tels que définis précédemment, et comprenant en général de 0 à 5.000 ppm de soufre, et une partie mineure d'au moins un additif de filtrabilité et d'au moins un révélateur d'efficacité selon l'invention tel que défini précédemment. Ce fioul lourd peut être utilisé comme combustible , notamment dans les moteurs marins et les chaudières industrielles.

Les additifs de tenue à froid et les additifs révélateurs d'efficacité en filtrabilité sont de préférence mis en oeuvre sous forme de compositions comprenant en général de 85 à 98 % massiques d'au moins un additif de filtrabilité et de 2 à 15 % massiques d'au moins un polymère (méth)acrylique tel que défini précédemment comme révélateur(s) de filtrabilité du ou des additifs de filtrabilité. Cette composition est préparée par exemple par mélange à température ambiante du ou des additifs de filtrabilité, éventuellement en solution, et du ou des révélateurs d'efficacité en filtrabilité, éventuellement en solution. Elle peut être ajoutée aux carburants au sein de la raffinerie et/ou être incorporés en aval de la raffinerie, éventuellement en mélange avec d'autres additifs, sous forme de package d'additifs.

En général, la composition comprenant additif(s) de filtrabilité et révélateur(s) de filtrabilité est ajoutée aux compositions à base d'hydrocarbures en quantité allant de 100 à 1.000 ppm massiques.

Outre les additifs de tenue à froid ou de filtrabilité décrits plus haut et les additifs révélateurs d'efficacité en filtrabilité selon l'invention, les compositions à base d'hydrocarbures peuvent également contenir un ou plusieurs autres additifs différents des copolymères selon l'invention, choisis parmi les détergents, les agents anti-corrosion, les dispersants, les désémulsifiants, des agents anti-mousse, des biocides, des réodorants, des additifs procétane, les modificateurs de friction, les additifs de lubrifiance ou additifs d'onctuosité, des agents d'aide à la combustion (promoteurs catalytiques de combustion et de suie), les agents améliorant le point de trouble, le point d'écoulement, la température limite de filtrabilité, des agents anti-sédimentation, les agents anti-usure et/ou les agents modifiant la conductivité.

Parmi ces additifs, on peut citer particulièrement :

a) les additifs procétane, notamment (mais non limitativement) choisis parmi les nitrates d'alkyle, de préférence le nitrate de 2-éthyl hexyle, les peroxydes d'aroyle, de préférence le peroxyde de benzyle, et les peroxydes d'alkyle, de préférence le peroxyde de ter-butyle ;

b) les additifs anti-mousse, notamment (mais non limitativement) choisis parmi les polysiloxanes, les polysiloxanes oxyalkylés, et les amides d'acides gras issus d'huiles végétales ou animales. Des exemples de tels additifs sont donnés dans EP 861 882, EP 663 000, EP 736 590 ;

c) les additifs détergents et/ou anti-corrosion, notamment (mais non limitativement) choisis dans le groupe constitué par les amines, les succinimides, les alkénylsuccinimides, les polyalkylamines, les polyalkyles polyamines et les polyétheramines. Des exemples de tels additifs sont donnés dans EP 938 535.

d) les additifs de lubrifiance ou agent anti-usure, notamment (mais non limitativement) choisi dans le groupe constitué par les acides gras et leurs dérivés ester ou amide, notamment le monooléate de glycérol, et les dérivés d'acides carboxyliques mono- et polycycliques. Des exemples de tels additifs sont donnés dans les documents suivants: EP 680 506, EP 860 494, WO 98/04656, EP 915 944, FR2 772 783, FR 2 772 784.

e) les additifs de point de trouble, notamment (mais non limitativement) choisis dans le groupe constitué par les terpolymères oléfine à chaîne longue/ester (méth)acrylique /maléimide, et les polymères d'esters d'acides fumarique /maléique. Des exemples de tels additifs sont donnés dans EP 71.513, EP 100.248, FR 2.528.051, FR 2.528.051, FR 2 .528.423, EP112.195, EP 172.758, EP 271.385, EP 291.367 ;

f) les additifs d'anti-sédimentation et/ou dispersants de paraffines notamment (mais non limitativement) choisis dans le groupe constitué par les copolymères acide (méth)acrylique/(méth)acrylate d'alkyle amidifié par une polyamine, les alkénylsuccinimides de polyamine, les dérivés d'acide phtalamique et d'amine grasse à double chaîne ; des résines alkyl phénol. Des exemples de tels additifs sont donnés dans EP 261 959, EP593 331, EP 674 689, EP 327 423, EP 512 889, EP 832 172 ; US 2005/0223631 ; US 5 998 530 ; WO 93/14178.

g) les additifs polyfonctionnels d'opérabilité à froid choisis dans le groupe constitué par les polymères à base d'oléfine et de nitrate d'alkényle tels que décrits dans EP 573.490. ;

h) les biocides ;
i) les additifs améliorant la conductivité ;
j) les additifs améliorant la combustion :
k) les additifs réodorants

Ces autres additifs sont en général ajoutés en quantité allant de 100 à 1 000 ppm massiques (chacun) dans les compositions à base d'hydrocarbures.

Dans les exemples qui suivent pour illustrer la présente invention sans toutefois en limiter la portée, les techniques de caractérisation suivantes ont été utilisées :

- viscosité cinématique à 40 °C, mesurée à l'aide d'un viscosimètre capillaire Walter Herzog selon la norme NF EN ISO 3104, et exprimée en $mm^2$/s.
- masses moléculaires moyennes en masse ($\overline{Mw}$) exprimées en équivalents PMMA (polyméthacrylate de méthyle) en g/mole et déterminées par chromatographie à Perméation de Gel (GPC) à l'aide d'un chromatographe Waters équipé de 5 colonnes Waters en série de référence HR 4+3+2+1+0,5, avec le THF comme éluant ; préparation des échantillons dilués à 0,5% dans le THF et élution à un débit de 1 ml/min ; détection par réfractométrie.
- taux de monomères résiduels mesuré par chromatographie à Perméation de Gel (GPC)
- température limite de filtrabilité (TLF) mesurée selon la norme NF EN 116
- point d'écoulement (PTE) mesuré selon la norme NF T 60 105
- point de trouble (PT) mesuré selon la norme NF EN 23 015
- teneur en aromatiques mesurée selon la norme IP391
- température de cristallisation commençante TCC mesuré par DSC
- température de distillation mesurée selon la norme D 86
- indice de cétane calculé mesuré selon la norme ASTM D4737
- masse volumique à 40 °C (MV 40) et à 15 °C (MV15) NF EN ISO 12185

Les composés suivants ont été mis en oeuvre :

- acrylate d'alkyles en $C_{18}$-$C_{22}$ (point de fusion : 40 °C ; masse moléculaire : 352 g/mol) commercialisé par la société Arkema France sous la dénomination Norsocryl ® A18-22 ;
- acrylate d'alkyles en $C_{18}$-$C_{22}$ comprenant de 42 à 46 % en poids d'acrylate de béhényle ($C_{22}$), de 40 à 44 % d'acrylate en $C_{18}$, de 9 à 13 % d'acrylate en $C_{20}$, jusqu'à 1,5 % d'acrylate en $C_{16}$ et jusqu'à 2 % d'acrylate en $C_{22+}$ commercialisé par la société Cognis sous la dénomination Acrylate de Behenyle 45% ;
- tert-butyl peroxybenzoate commercialisé par la société Arkema France sous la dénomination LUPEROX® P ;
- tert-butyl peroxy -2- éthyl hexanoate commercialisé par la société Arkema France sous la dénomination LUPEROX® 26 ;
- accélérateur de décomposition : N,N'-diméthyl-p-toluidine (NNDPT) commercialisé par la société Akzo Nobel sous la dénomination Accelerator® NL-65-100 ou par la société Cognis sous la dénomination : Bisomer® PTE ;
- solvant organique : solvant aromatique commercialisé par la société Exxon Mobil sous la dénomination Solvesso 150 (S150) ;
- inhibiteur de polymérisation : hydroquinone monométhyl éther (HQMME) ;

Exemple 1

Dans un réacteur de polymérisation de 200 L préalablement dégazé à l'azote et placé sous atmosphère d'azote, on introduit le pied de cuve constitué de 294,7 parties massiques d'Acrylate de béhényle 45 % préalablement fondu dans une étuve à 70 °C et 631,2 parties massiques de Solvesso 150. Le pied de cuve est placé sous agitation (ancre d'agitation de type U ; vitesse d'agitation : 75 trs/min) sous léger barbotage d'azote (1 $m^3$/h) puis porté à une température de 100 °C.

Une fois la température de polymérisation ou de consigne atteinte dans le pied de cuve, on démarre l'addition continue au moyen d'une pompe doseuse d'une solution comprenant 12,7 parties massiques de tert-butyl peroxybenzoate (amorceur radicalaire), de 61,3 parties massiques de solvant aromatique Solvesso 150 pendant une durée de 6 h 30 et sous agitation. Tout au long de l'addition, la température de consigne est maintenue à 100 °C $\pm$ 2°C.

Une fois l'addition terminée, on effectue une cuisson de 1 h à la température de consigne, toujours sous agitation.

On refroidit ensuite le milieu réactionnel maintenu sous agitation jusqu'à 60 °C ; on arrête alors le barbotage d'azote et on ajoute 0,1 partie massique de HQMME ; on maintient l'agitation pendant 15 min.

On obtient ainsi un polyacrylate en $C_{18}$-$C_{22}$ en solution dans le Solvesso 150 dont les caractéristiques sont :

Extrait sec : 30% $\overline{Mw}$ : 9.540 g/mole ; taux de monomères résiduel : 6,7 % en masse ; viscosité à 40 °C : 5,99 mm²/s.

Exemple 2

On reproduit l'exemple 1 mais en associant un accélérateur de décomposition (NNDPT) à l'amorceur radicalaire. L'accélérateur de décomposition est ajouté en continu en même temps que la solution organique d'amorceur à raison de 4 parties massiques.

Exemple 3

On reproduit l'exemple 1 mais en remplaçant le tert-butyl peroxybenzoate par du tert-butyl peroxy-2 éthyl hexanoate dans les mêmes proportions molaires.

Exemple 4

On reproduit l'exemple 3 mais en associant un accélérateur de décomposition (NNDPT) à l'amorceur radicalaire. L'accélérateur de décomposition est ajouté en continu en même temps que la solution organique d'amorceur à raison de 4 parties massiques.

Exemples 5 et 6 (comparatifs selon WO 2008/006998)

Dans un réacteur de polymérisation préalablement dégazé à l'azote et placé sous atmosphère d'azote, on introduit le pied de cuve constitué de 75 parties massiques de Solvesso 150 et 4 parties massiques de Luperox® 26. Le pied de cuve est porté à 100 °C, sous agitation (ancre d'agitation de type U).

Le Norsocryl® A18-22 est préalablement fondu dans une étuve à 70°C. On prépare ensuite sous agitation une solution A constituée de 153,5 parties massiques de Solvesso 150 et 100 parties massiques de Norsocryl® A 18-22 fondu. Une deuxième solution notée B est préparée à partir de 4 parties massiques d'Accelerator® NL-65-100 et 35 parties de Solvesso 150. Une fois la température de consigne atteinte dans le pied de cuve, on démarre simultanément mais séparément l'addition continue des solutions A et B, sur une durée de 6h30 et sous agitation.

Tout au long de l'addition, la température de consigne est maintenue à 100°C ± 2°C. Une fois l'addition terminée, on effectue une cuisson de 1 h à la température de consigne après avoir rajouté 0,5 partie massique de Luperox® 26 préalablement dissout dans 5 parties de Solvesso 150. Le réacteur est ensuite refroidi et la résine stabilisée par l'addition de 100 ppm de HQMME.

L'ensemble des caractéristiques des polymères des exemples 1 à 6 notés Bi est réuni dans le tableau 1.

Tableau 1

| Exemple | $\overline{Mw}$ | Taux de monomères résiduels (% masse) | Viscosité à 40 °C (mm²/s) |
|---------|------|----------------------------------------|-----------------------------|
| B1 | 10.420 | 6,64 | 7,24 |
| B2 | 10.420 | 14,04 | 5,986 |
| B3 | 9.220 | 6,36 | 7,24 |
| B4 | 9.910 | 6,64 | 6,75 |
| B5 | 8.780 | 20,76 | 4,316 |
| B6 | 8.900 | 18,73 | 4,094 |

Exemple 7

Dans cet exemple, on mesure et compare l'efficacité de l'amélioration de la TLF apportée par les polymères Bi des exemples 1 à 6 ajoutés à un carburant de type fioul domestique. Les caractéristiques du distillat testé sans additif de filtrabilité ni révélateur d'efficacité sont réunies dans le tableau 2 ci-dessous.

Tableau 2

| Distillat testé de type Fuel-oil domestique (FOD) | |
|---|---|
| Total des n-paraffines par LC/GC (% massique) | 11,08 |
| dont            $<C_{13}$ | 1,77 |
| $C_{13}$-$C_{17}$ | 4,2 |
| $C_{18}$-$C_{23}$ | 4,31 |
| $> C24$ | 0,8 |
| Température limite de filtrabilité TLF (°C) | 0 |
| Point d'écoulement PTE (°C) | |
| Point de trouble PT (°C) | 0 |
| MV15 (kg/m$^3$) | 863 |
| Teneur en soufre (ppm) | 1240 |
| Teneur en aromatiques | |
| Mono Aromatiques % masse | 27,6 |
| Di Aromatiques % masse | 8,2 |
| Poly Aromatiques % masse | 3,3 |
| TCC (°C) | -1,2 |
| Distillation (°C) | |
| Point Initial | 162,6 |
| T10 | 195,5 |
| T20 | 220,7 |
| T50 | 293,6 |
| T80 | 341 |
| T90 | 357 |
| T95 | 372 |
| Point Final | 382,8 |

Les additifs TLF testés sont un mélange de 2 copolymères EVA (EVA1 +EVA2) dans le ratio massique 15/85 puis dilué avec un solvant aromatique du type Solvesso 150 ou Solvarex 10 dans le ratio EVA1+EVA2/solvant : 70/30.

L'EVAI contient 71,5 % en masse d'éthylène et 28,5 % masse d'acétate de vinyle ; l'EVA2 contient 69,5% en masse d'éthylène et 30,5 % masse d'acétate de vinyle. Ces EVA ont une $\overline{Mw}$ de 5.000 et 9.000 g/mole respectivement et une viscosité à 100 °C respectivement de 0,3 et 0,4 Pa.s$^{-1}$.

On compare la TLF du carburant additivé avec un additif TLF d'une part et avec un additif de TLF plus un révélateur d'efficacité Bi d'autre part pour des quantités variables d'additif TLF seul et d'additif TLF avec révélateurs d'efficacité exprimées en ppm massiques.

Les résultats sont réunis dans le tableau 3.

Tableau 3

| Efficacité TLF (°C) | | | | | |
|---|---|---|---|---|---|
| Révélateur de l'exemple | Dosage additif dans FOD (ppm masse) | 0 | 200 | 300 |
| | Composition des formulations d'additif (EVA1/EVA2/Bi/solvant) | | | |
| - | EVA1 /EVA2/S150 (10,5/59,5/0/30) | 1 | 4 | 3 |

(suite)

| Efficacité TLF (°C) | | | | | |
|---|---|---|---|---|---|
| Révélateur de l'exemple | Dosage additif dans FOD (ppm masse) | 0 | 200 | 300 | |
| | Composition des formulations d'additif (EVA1/EVA2/Bi/solvant) | | | | |
| 1 | EVA1/EVA2//S150//B1 (9,5/53,5/3/34) | 1 | -5 | -7 | |
| 2 | EVA1 /EVA2//S150//B2 (9,5/53,5/3/34) | 1 | -3 | -7 | |
| 3 | EVA1 /EVA2//S150//B3 (9,5/53,5/3/34) | 1 | -5 | -7 | |
| 4 | EVA1 /EVA2//S150//B4 (9,5/53,5/3/34) | 1 | -5 | -7 | |
| 5 comparatif | EVA1/EVA2//S150//B5 (9,5/53,5/3/34) | 1 | 1 | -6 | |
| 6 comparatif | EVA1/EVA2//S150//B6 (9,5/53,5/3/34) | 1 | 0 | -7 | |

Exemple 8

Dans cet exemple, on mesure et compare l'efficacité de l'amélioration de la TLF apportée par les polymères Bi des exemples 1 à 6 ajoutés à un carburant de type gazole moteur. Les caractéristiques du distillat testé sans additif de filtrabilité ni révélateur d'efficacité sont réunies dans le tableau 4 ci-dessous.

Tableau 4

| Distillat testé de type gazole moteur (GOM) | |
|---|---|
| Total des n-paraffines par LC/GC (% massique) | 30,43 |
| dont                          $<C_{13}$ | 12,47 |
| $C_{13}$-$C_{17}$ | 9,61 |
| $C_{18}$-$C_{23}$ | 5,76 |
| $> C24$ | 2,59 |
| Température limite de filtrabilité TLF (°C) | +10 |
| Point d'écoulement PTE (°C) | +6 |
| Point de trouble PT (°C) | +11 |
| TCC (°C) | +7,3 |

Les additifs TLF testés sont un mélange de 2 copolymères EVA (EVA1 +EVA2) dans le ratio massique 15/85 puis dilué avec un solvant aromatique du type Solvesso 150 ou Solvarex 10 dans le ratio EVA1+EVA2/solvant : 70/30.
L'EVAl contient 71,5 % en masse d'éthylène et 28,5 % masse d'acétate de vinyle ; l'EVA2 contient 69,5% en masse d'éthylène et 30,5 % masse d'acétate de vinyle. Ces EVA ont une $\overline{Mw}$ de 5.000 et 9.000 g/mole respectivement et une viscosité à 100 °C respectivement de 0,3 et 0,4 Pa.s$^{-1}$.
Le révélateur d'efficacité est le produit B1 décrit ci-dessus (voir tableau 1) .
Dans certains exemples, on ajoute un additif améliorant le point de trouble (CP) qui est un terpolymères statistique de méthacrylate de stéaryle, d'alpha-oléfine en C20-C24 et de N-suif maléimide (densité à 15°C : 890 - 930 kg/m$^3$ -point d'éclair: > 55 °C (NF EN ISO 22719) ; température d'auto-inflammation : > 450 °C environ) commercialisé par la société Total Additfs & Carburants Spéciaux sous la dénomination CP8327.
On compare la TLF du carburant additivé avec un additif TLF d'une part et avec un additif de TLF plus un révélateur d'efficacité Bi d'autre part pour des quantités variables d'additif TLF seul et d'additif TLF avec révélateurs d'efficacité exprimées en ppm massiques.

Les résultats sont réunis dans le tableau 5.

Tableau 5

| Efficacité TLF (°C) | | | | | |
|---|---|---|---|---|---|
| Révélateur de l'exemple | Dosage additif dans GOM (ppm masse) | 0 | 300 | Gain TLF | |
| | Composition des formulations d'additif (EVA1/EVA2/..../solvant) | | | | |
| - | EVA1 /EVA2/S150 (35/35/30) | 10 | 9 | 1 | |
| 1 | EVA1/EVA2/B1/S150 (35/35/3/34) | 10 | 6 | 4 | |
| - | EVA1/EVA2/CP/S150 (31,5/31,5/5/32) | 1 | 4 | 6 | |
| 1 | EVA1/EVA2/B1/CP/S150 (23/23/3/5/36)) | 10 | 1 | 9 | |

**Revendications**

1.  Polymères polyacrylates et/ou polyméthacrylates d'alkyle à chaîne grasse linéaire ou ramifiée en C8 ou plus pouvant comporter au moins une insaturation éthylénique, de masse moléculaire moyenne en poids $\overline{Mw}$ inférieure à 20.000 g/mole, exempts de composés soufrés, métalliques et halogènes et dont le taux de monomères résiduels mesuré par GPC est inférieur ou égal à 10 % massique, de préférence inférieur ou égal à 7% massique, lesdits polymères étant obtenus par polymérisation radicalaire en solution, ladite polymérisation étant **caractérisée en ce que** l'on introduit initialement dans le réacteur un pied de cuve constitué de la totalité du ou des monomères (méth)acrylates à chaîne grasse linéaire ou ramifiée en C8 ou plus pouvant comporter au moins une insaturation éthylénique, puis on ajoute en continu l'amorceur radicalaire éventuellement en solution dans un solvant organique.

2.  Polymères selon la revendication 1, comportant une chaîne linéaire ou ramifiée comportant de 12 à 50 atomes de carbone, de préférence de 16 à 40 atomes de carbone.

3.  Polymères selon la revendication 1 ou 2, de masse moléculaire moyenne en poids comprise entre 5.000 et 18.000 g/mole.

4.  Procédé de synthèse de polymères polyacrylates et/ou polyméthacrylates d'alkyle à chaîne grasse linéaire ou ramifiée en $C_8$ ou plus pouvant comporter au moins une insaturation éthylénique, de masse moléculaire moyenne en poids $\overline{Mw}$ inférieure à 20.000 g/mole, exempts de composés soufrés, métalliques et halogènes, par polymérisation radicalaire en solution et dont le taux de monomères résiduels mesuré par GPC est inférieur ou égal à 10 % massique, de préférence inférieur ou égal à 7 % massique, **caractérisé en ce que**

    (a) dans un réacteur, on introduit un pied de cuve constitué de la totalité de(s) monomère (méth)acrylate(s) seul(s) ou éventuellement en solution dans un solvant organique ; le milieu réactionnel est mis sous agitation, de préférence sous atmosphère inerte, par exemple sous barbotage d'azote ;
    (b) on porte le pied de cuve issu de l'étape (a) à la température de polymérisation ;
    (c) à la température de polymérisation, on ajoute en continu un amorceur radicalaire, éventuellement en solution dans un solvant organique ;
    (d) on maintient le milieu réactionnel issu de l'étape (c) à la température de polymérisation pendant plusieurs dizaines de minute,
    (e) on refroidit le milieu réactionnel à une température allant de 50 à 60 °C, de préférence sous atmosphère oxydante, de préférence sous agitation, on ajoute au moins un inhibiteur de polymérisation,
    (f) on récupère le polymère en solution dans le solvant organique, de préférence après filtration des impuretés présentes dans le milieu réactionnel.

**5.** Procédé selon la revendication 4, **caractérisé en ce que** le(s) monomère(s) (méth)acrylate(s) comporte(nt) une chaîne linéaire ou ramifiée comportant de 12 à 50 atomes de carbone, de préférence de 16 à 40 atomes de carbone.

**6.** Procédé selon la revendication 4 ou 5, **caractérisé en ce que** la teneur en amorceur radicalaire est comprise entre 2 et 14% en poids par rapport aux monomères, de préférence comprise entre 2 et 6%.

**7.** Procédé selon l'une des revendications 4 à 6, **caractérisé en ce que** l'amorceur radicalaire est un peroxyde organique.

**8.** Procédé selon l'une des revendications 4 à 7, **caractérisé en ce qu'**on associe à l'amorceur radicalaire un accélérateur de décomposition en solution dans un solvant organique, ledit accélérateur de décomposition étant ajouté au milieu réactionnel simultanément à l'amorceur ou de manière séparée.

**9.** Procédé selon la revendication 8, caractérisé en que l'accélérateur de décomposition est un dérivé aminé aromatique.

**10.** Utilisation de polymères tels que définis dans l'une quelconque des revendications 1 à 3, comme additifs dans des formulations de résines acryliques solvantées à haut extrait sec.

**11.** Utilisation de polymères tels que définis dans l'une quelconque des revendications 1 à 3, comme additifs dans des formulations pétrolières telles que des formulations de lubrifiants, de carburants ou de combustibles.

**12.** Utilisation selon la revendication 11 dans des distillats hydrocarbonés de température d'ébullition comprise entre 150 et 450 °C pour révéler l'efficacité des additifs de filtrabilité desdits distillats à base de co- et/ou terpolymère d'éthylène et d'ester vinylique d'acide carboxylique en $C_3$-$C_5$ et de mono-alcool comprenant 1 à 10 atomes de carbone.

**Patentansprüche**

**1.** Polyacrylat- und/oder Polyalkylmethacrylatpolymere mit linearer oder verzweigter Fettkette, die mindestens 8 Kohlenstoffatome enthält, die mindestens eine ethylenische Unsättigung enthalten können, die ein massenmittleres Molekulargewicht $\overline{Mw}$ von weniger als 20.000 g/mol aufweisen, die frei von schwefelhaltigen Verbindungen, Metallverbindungen und halogenierten Verbindungen sind und deren, durch GPC gemessener Restmonomergehalt weniger als 10 Massen-%, vorzugsweise weniger oder gleich 7 Massen-% beträgt, wobei die Polymere durch Lösungs-Radikalpolymerisation erhalten werden, und wobei die Polymerisation **dadurch gekennzeichnet ist, dass** anfangs ein Ansatz, bestehend aus der Gesamtheit des oder der (Meth)acrylatmonomere mit linearer oder verzweigter Fettkette, die mindestens 8 Kohlenstoffatome enthält, die mindestens eine ethylenische Unsättigung umfassen können, in den Reaktor eingebracht wird, wobei danach der Radikalinitiator, gegebenenfalls in einem organischen Lösungsmittel gelöst, kontinuierlich zugesetzt wird.

**2.** Polymere, nach Anspruch 1 mit mindestens einer linearen oder verzweigten Kette, die 12 bis 50 Kohlenstoffatome, vorzugsweise 16 bis 40 Kohlenstoffatome enthält.

**3.** Polymere nach Ansprüchen 1 oder 2 mit einem, im Bereich von 5.000 und 18.000 g/mol liegenden, massensmittleren Molekulargewicht.

**4.** Verfahren zur Synthese von Polyacrylat- und/oder Polyalkylmethacrylatpolymeren mit linearer oder verzweigter Fettkette die mindestens 8 Kohlenstoffatome enthält, die mindestens eine ethylenische Unsättigung enthalten können, mit einem massensmittleren Molekulargewicht $\overline{Mw}$ von weniger als 20.000 g/mol, die frei von schwefelhaltigen Verbindungen, Metallverbindungen und halogenierten Verbindungen sind, durch Lösungs-Radikalpolymerisation, und wovon der, durch GPC gemessene Restmonomergehalt weniger als 10 Massen-%, vorzugsweise weniger oder gleich 7 Massen-% beträgt, **dadurch gekennzeichnet dass**:

(a) in einen Reaktor ein Ansatz eingeführt wird, der aus der Gesamtheit des (Meth)acrylatmonomer oder der (Meth)acrylatmonomere besteht, allein oder gegebenenfalls gelöst in einem organischen Lösungsmittel; das Reaktionsmilieu in Rührung gebracht wird, vorzugsweise unter einer inerten Atmosphäre, zum Beispiel unter Einleiten von Stickstoff;
(b) der Ansatz aus Schritt (a) auf die Polymerisationstemperatur gebracht wird;

(c) bei der Polymerisationstemperatur ein Radikalinitiator, gegebenenfalls gelöst in einem organischen Lösungsmittel, kontinuierlich zugesetzt wird;

(d) das Reaktionsmilieu aus Schritt (c) über mehrere Dutzend Minuten auf einer Polymerisationstemperatur gehalten wird;

(e) das Reaktionsmilieu auf eine Temperatur von 50 bis 60 °C abgekühlt wird, und vorzugsweise unter einer oxidierenden Atmosphäre, vorzugsweise unter Rühren, mindestens ein Polymerisationsinhibitor zugesetzt wird;

(f) das im organischen Lösungsmittel gelöste Polymer, vorzugsweise nach dem Filtrieren der, im Reaktionsmilieu enthaltenen Verunreinigungen wiedergewonnen wird.

5. Verfahren nach Anspruch 4, **dadurch gekennzeichnet dass** das (Meth)acrylatmonomer oder die (Meth)acrylatmonomere eine lineare oder verzweigte Kette umfasst oder umfassen, die 12 bis 50 Kohlenstoffatome, vorzugsweise 16 bis 40 Kohlenstoffatome enthält.

6. Verfahren nach Anspruch 4 oder 5, **dadurch gekennzeichnet dass** der Gehalt an Radikalinitiator, den Monomeren gegenüber, im Bereich von 2 bis 14 Gewichts-%, vorzugsweise im Bereich von 2 bis 6% liegt.

7. Verfahren nach einem der Ansprüche 4 bis 7, **dadurch gekennzeichnet dass** der Radikalinitiator ein organisches Peroxid ist.

8. Verfahren nach einem der Ansprüche 4 bis 7, **dadurch gekennzeichnet, dass** dem Radikalinitiator ein, in einem organischen Lösungsmittel gelöster Zersetzungsbeschleuniger zugeordnet wird, wobei der Zersetzungsbeschleuniger gleichzeitig mit dem Initiator oder separat dem Reaktionsmilieu zugesetzt wird.

9. Verfahren nach Anspruch 8, **dadurch gekennzeichnet dass** der Zersetzungsbeschleuniger ein aromatisches Aminoderivat ist.

10. Verwendung von Polymeren, wie in einem der Ansprüche 1 bis 3 definiert, als Zusätze in lösungsmittelhaltigen Acrylharz-Formulierungen mit hohem Feststoffgehalt.

11. Verwendung von Polymeren, wie in einem der Ansprüche 1 bis 3 definiert, als Zusätze in Erdöl-Formulierungen wie z. B. Schmiermittel-, Kraftstoff- und Brennstoff-Formulierungen.

12. Die Verwendung nach Anspruch 11 in Kohlenwasserstoffdestillaten einer, im Bereich von 150 bis 450 °C liegenden Siedetemperatur, um die Wirksamkeit der Filtrierbarkeitsadditive der Destillate basierend auf Äthylen- und $C_3$-$C_5$-Carboxylsäurevinylester-Co- und/oder -Terpolymer und einen, 1 bis 10 Kohlenstoffatome enthaltenden Monoalkohol zu erweisen.

**Claims**

1. A $C_8$ or higher, linear or branched fatty chain alkyl polyacrylate and/or polymethacrylate polymers possibly containing at least one ethylene unsaturation, of weight average molecular weight $\overline{Mw}$ less than 20,000 g/mole, free of sulphur-containing, metallic and halogenated compounds and with a residual monomer content measured by GPC of less than or equal to 10% by weight, preferably less than or equal to 7% by weight, said polymers being obtained by radical polymerization in solution, said polymerization being **characterized in that** initially a starter is placed in the reactor composed of the entirety of the $C_8$ or higher, linear or branched fatty chain methacrylate monomer(s) which may contain at least one ethylene unsaturation, then a continuous addition is made of the radical initiator optionally in solution in an organic solvent.

2. The polymers according to claim 1, comprising a linear or branched chain comprising 12 to 50 carbon atoms, preferably 16 to 40 carbon atoms.

3. The polymers according to claim 1 or 2, of weight average molecular weight of between 5,000 and 18,000 g/mole.

4. A method for synthesizing $C_8$ or higher, linear or branched fatty chain alkyl polyacrylate and/or polymethacrylate polymers possibly containing at least one ethylene unsaturation, of weight average molecular weight $\overline{Mw}$ less than 20,000 g/mole, free of sulphur-containing, metallic and halogenated compounds, by radical polymerization in solution, and with a residual monomer content measured by GPC of less than or equal to 10% by weight, preferably less than or equal to 7% by weight, **characterized in that**

(a) to a reactor, a starter is added consisting of the entirety of the methacrylate monomer(s) either alone or optionally in solution in an organic solvent; the reaction medium is placed under agitation preferably in an inert atmosphere e.g. under nitrogen bubbling;
(b) the starter derived from step (a) is brought to the polymerization temperature;
(c) at the polymerization temperature, a continuous addition is made of a radical initiator, optionally in solution in an organic solvent;
(d) the reaction medium derived from step (c) is held at the polymerization temperature for several tens of minutes;
(e) the reaction medium is cooled down to a temperature of between 50 and 60 °C, preferably in an oxidizing atmosphere, preferably under agitation, at least one polymerization inhibitor is added;
(f) the polymer in solution in the organic solvent is collected, preferably after filtering the impurities present in the reaction medium.

5. The method according to claim 4, **characterized in that** the methacrylate monomer(s) have a linear or branched chain comprising 12 to 50 carbon atoms, preferably 16 to 40 carbon atoms.

6. The method according to claim 4 or 5, **characterized in that** the content of radical initiator is comprised between 2 and 14% by weight relative to the monomers, preferably comprised between 2 and 6%.

7. The method according to one of claims 4 to 6, **characterized in that** the radical initiator is an organic peroxide.

8. The method according to one of claims 4 to 7, **characterized in that** the radical initiator is combined with a decomposition accelerator in solution in an organic solvent, said decomposition accelerator being added to the reaction medium simultaneously with the initiator or separately.

9. The method according to claim 8, **characterized in that** the decomposition accelerator is an aromatic amine derivative.

10. Use of polymers as defined in any one of claims 1 to 3, as additives in formulations of solvated acrylic resins with high dry extract.

11. Use of polymers as defined in any one of claims 1 to 3, as additives in petroleum formulations such as formulations of lubricants, fuels or hydrocarbons.

12. Use according to claim 11, in hydrocarbon distillates having a boiling point of between 150 and 450 °C for enhancing the efficiency of filterability additives of said distillates containing co- and/or terpolymer of ethylene, $C_3$-$C_5$ carboxylic acid vinyl ester and mono-alcohol comprising 1 to 10 carbon atoms.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6844406 B
- US 4117235 A
- US 4652605 A
- US 4056559 A
- US 4301266 A
- FR 2604712
- US 3028367 A
- US 5475073 A
- WO 2008006998 A
- WO 2008006965 A
- WO 2008006968 A
- US 3627838 A
- EP 7590 A
- US 6509424 B
- EP 861882 A
- EP 663000 A
- EP 736590 A
- EP 938535 A
- EP 680506 A
- EP 860494 A
- WO 9804656 A
- EP 915944 A

- FR 2772783
- FR 2772784
- EP 71513 A
- EP 100248 A
- FR 2528051
- FR 2528423
- EP 112195 A
- EP 172758 A
- EP 271385 A
- EP 291367 A
- EP 261959 A
- EP 593331 A
- EP 674689 A
- EP 327423 A
- EP 512889 A
- EP 832172 A
- US 20050223631 A
- US 5998530 A
- WO 9314178 A
- EP 573490 A
- NL 65100

**Littérature non-brevet citée dans la description**

- *Paint India,* Août 2003, vol. 53 (8), 33-46

- Waxes. Ullmann's Encyclopedia of Industrial Chemistry. vol. A 28, 146